# EUROPÄISCHE PATENTSCHRIFT

(11) **EP 3 458 752 B1**
(45) Veröffentlichungstag und Bekanntmachung des Hinweises auf die Patenterteilung: **17.06.2020**
(21) Anmeldenummer: 17713631.4
(22) Anmeldetag: 24.03.2017
(51) Int. Cl.: F16K 31/126, F01N 3/20, F01N 11/00, F16K 37/00, F16K 7/14, F16K 7/17, F16K 31/06

(54) **ABSPERRVENTIL, SCR-SYSTEM UND VERFAHREN ZUR LECKAGEDETEKTION UND/ODER DOSIERMENGENABWEICHUNGSERKENNUNG**
STOP VALVE, SCR SYSTEM, AND METHOD FOR DETECTING LEAKS AND/OR IDENTIFYING VARIATIONS IN METERED AMOUNTS
SOUPAPE D'ARRÊT, SYSTÈME SCR ET PROCÉDÉ DE DÉTECTION DE FUITE ET/OU D'IDENTIFICATION D'UN ÉCART DE DOSAGE

(30) Priorität: 19.05.2016 DE 102016208611
(43) Veröffentlichungstag der Anmeldung: 27.03.2019
(73) Patentinhaber: Robert Bosch GmbH, 70442 Stuttgart (DE)
(72) Erfinder: ZHOU, Chen, 71726 Benningen Am Neckar (DE); HEITZER, Simon Michael, 83059 Kolbermoor (DE); VENEKAMP, Okke, 83122 Samerberg (DE)
(86) Internationale Anmeldenummer: PCT/EP2017/057079
(87) Internationale Veröffentlichungsnummer: WO 2017/198380

(56) Entgegenhaltungen:
- DE-A1- 10 343 940
- DE-A1-102005 050 276
- DE-A1-102008 020 042
- DE-A1-102008 063 933
- DE-A1-102012 215 394
- DE-A1-102014 218 088
- DE-B3-102004 018 567
- JP-A- H07 243 542
- US-A- 4 453 700
- US-A1- 2011 072 888
- US-A1- 2014 374 635

## Beschreibung

Die vorliegende Erfindung betrifft ein Absperrventil. Des Weiteren betrifft die Erfindung ein SCR-System, welches dieses Absperrventil umfasst sowie ein Verfahren zur Leckagedetektion und/oder Dosiermengenabweichungserkennung in besagtem SCR-System. Darüber hinaus betrifft die vorliegende Erfindung ein Computerprogramm, das jeden Schritt des Verfahrens ausführt, wenn sie auf einem Rechengerät abläuft, sowie ein maschinenlesbares Speichermedium, welches das Computerprogramm speichert. Schließlich betrifft die Erfindung ein elektronisches Steuergerät, welches eingerichtet ist, um das Verfahren auszuführen.

### Stand der Technik

Absperrventile werden zur Steuerung von Fluidbewegungen genutzt. Dabei geben sie in einem geöffneten Zustand die Strömungsrichtung eines Fluids vor und verhindern in einem geschlossenen Zustand die Bewegung des Fluids. Absperrventile werden heutzutage in SCR-Systemen eingesetzt um eine Bewegung eines Reduktionsmittels (AdBlue®) zu steuern. Insbesondere sind Absperrventile in einer Druckleitung des SCR-Systems zwischen einem Fördermodul und einem Dosiermodul angeordnet. Dort sollen sie eine Leckage des Reduktionsmittels in die Druckleitung verhindert, da sonst die Möglichkeit besteht, dass dieses einfriert und sensible Bauteile beschädigt werden.

Ein Beispiel für ein Absperrventil, wie oben beschrieben, wird in der Druckschrift DE 10 2011 090 070 A1 gegeben. Diese betrifft ein Absperrventil, welches in einem SCR-System zum Einsatz gebracht wird. Es handelt sich dabei um ein 2/2-Wegeventil, bei dem ein Membranschieber, mittels einer Membranfeder, auf eine Membran gedrückt wird. Der Durchlasszustand wird über eine Magnetspule realisiert und kann dann selbstständig, bei erreichtem Minimaldruck in Durchlassrichtung im System, geöffnet bleiben. Das Absperrventil verhindert im geschlossenen Zustand, respektive bei geschlossenem Membranschieber, eine Leckage.

Ebenso betrifft die Druckschrift DE 10 2012 204 104 A1 ein Absperrventil, das in einer Vorrichtung zur Belüftung eines Abgasnachbehandlungssystems angeordnet ist. Dabei ist das Absperrventil zwischen Fördermodul und Dosiermodul in einer Förderleitung angeordnet. Das 2/2-Wegeventil wird über einen Aktuator hydraulisch betätigt, daher ist hier kein Magnet notwendig. Von der Förderleitung zweigt eine Steuerleitung ab, die zum Steuern des Aktuators verwendet wird. Herrscht nun, im Fördermodus, Überdruck in der Förderleitung, wird der Aktuator aktiviert und öffnet das Ventil.

Des Weiteren betrifft die Druckschrift DE 10 2012 211112 A1 ein Absperrventil, welches in einem SCR-System zum Einsatz gebracht wird. In diesem System wird das Umschalten zwischen Fördermodus und Rücklaufmodus über ein zusätzliches Schaltventil erreicht. Dieses Absperrventil besteht aus einem Wechselventil und einem 2/2-Wegeventil. Das Wechselventil öffnet das 2/2-Wegeventil, bei zwei unterschiedlichen Druckniveaus. Das hat zur Folge, dass das Absperrventil sowohl im Fördermodus, als auch im Rücksaugmodus, geöffnet werden kann.

Die Druckschrift DE 10 2012 209 689 A1 betrifft eine Anordnung zur Abgasnachbehandlung mittels SCR. Darin werden ein Fördermodul, sowie ein Absperrventil beschrieben. Das Absperrventil verhindert mittels eines Absperrelements eine Leckage. Realisiert wird dies durch einen Dichtstempel, welcher im geschlossenen Zustand dicht auf dem Dichtsitz aufliegt. Der geöffnete Zustand wird mithilfe eines bistabilen Federelements erreicht, welches den Dichtstempel mit niedriger Haltekraft gegen die Aufschlagfläche drückt. Das bistabile Federelement sorgt hierbei für eine hohe Schließkraft und eine niedrige Haltekraft. Dies ermöglicht eine Nutzung des Ventils, ohne aktives Ansteuern, sodass das Ventil in dieser Anordnung vorzugsweise passiv genutzt wird.

Die US 2014/0374635 A1 beschreibt ein Gasventil mit einem Einlass, einem Auslass und einem Verbindungsloch, das den Einlass und den Auslass verbindet. Ein Ventilsitz wirkt mit dem Verbindungsloch zusammen, um ein Durchströmen zu unterbinden. Ferner weist das Ventil ein Magnetjoch, eine Magnetspule und einen Magnetanker auf. An dem Magnetanker ist eine Membran angeordnet, welche das Verbindungsloch abdichten kann. Eine Druckfeder ist um die Magnetspule herum angeordnet und presst den Magnetanker mit der Membran gegen das Verbindungsloch. Um das Ventil zu öffnen, wird die Magnetspule aktiviert, sodass der Ventilsitz in eine offene Position bewegt wird und dort gehalten wird.

Die DE 10 2014 218 088 A1 beschreibt ein hydraulisches Förder- und Dosiersystem mit wenigstens einem Absperrventil und ein Verfahren zum Betreiben eines solchen Förder- und Dosiersystems, mit dem auf einen Dosiermengenfehler geschlossen werden kann. Das Absperrventil kann als aktives Ventil, passives Ventil oder hybrides Ventil ausgebildet sein. Das aktive Ventil wird zur Ansteuerung immer bestromt. Das passive Ventil kann als ein Rückschlagventil oder eine Kombination aus zwei Rückschlagventilen ausgebildet sein. Für den Fall eines Rückschlagventils ist der Dosiermodus unbestromt möglich und der Rücksaugmodus wird bestromt durchgeführt, ein Absperrmodus ist hingegen nicht vorgesehen. Für den Fall von zwei kombinierten Rückschlagventilen sind ein stromloser Dosiermodus und ein stromloser Sperrmodus möglich, allerdings werden die Ventile für den Rücksaugmodus nicht bestromt. Das hybride Ventil ist eine Kombination aus aktivem und passivem Ventil. Der Dosiermodus und der Sperrmodus sind unbestromt möglich. Ein Rücksaugmodus wird durch aktives Ansteuern des Absperrventils erreicht.

### Offenbarung der Erfindung

Es wird ein Absperrventil vorgeschlagen, welches zur Steuerung einer Fluidbewegung eingerichtet ist. Insbesondere soll das Absperrventil, wenn es einen Sperrmodus annimmt, eine Bewegung des Fluids, sowie eine Leckage, verhindern. Zu diesem Zweck umfasst es ein Magnetjoch, eine Magnetspule, sowie eine Druckfeder. Außerdem umfasst das Absperrventil eine Führung und einen Führungsbolzen, der in die Führung eingeschoben wird. Die Führung ist mit einem Magnetanker verbunden, an dem eine elastische Membran angeordnet ist, wobei die Membran auf mindestens einem Fluidanschluss dichtschließend anpressbar ist. Die Druckfeder ist so angeordnet, dass sie die Magnetspule und gegebenenfalls den Magnetanker umschließt. Der Magnetanker kann dabei insbesondere als Flachanker oder als Tauchanker ausgeführt sein.

Je nach Ausführungsbeispiel kann die Führung unterschiedlich ausgestaltet sein. In einer Version sind Führungsbuchsen innerhalb der Magnetspule ausgebildet, in die der Führungsbolzen eingeschoben wird. Alternativ können auch Gleitlagerbuchsen oder eine Gleitlagerschicht an einer Zwischenscheibe ausgebildet sein, an der Magnetanker an diesen Gleitlagerbuchsen bzw. Gleitlagerschicht entlang reibt und dadurch geführt wird. Um eine möglichst hohe Haltbarkeit zu gewährleisten werden die Gleitlagerbuchsen bzw. die Gleitlagerschicht vorzugsweise aus Nickel oder anderen härteren Beschichtungen hergestellt und der Magnetanker aus magnetischem Edelstahl. Zusätzlich wird der Magnetanker vorzugsweise von dem Führungsbolzen gestützt. Die Führung hat den Vorteil, dass Querkräfte die auf den Magnetanker wirken kompensiert werden können.

Ein weiterer Aspekt der Führung betrifft eine Übertragung von Wärmeenergie aus der Magnetspule zu einem Fluidanschluss. Die Führung kann so ausgebildet sein, dass sie an dem Magnetjoch anliegt. Somit entstehen Wärmeübertragungsflächen über die Wärmeenergie von der Magnetspule zum Führungsbolzen übertragen werden kann. Da die Führung ebenfalls mit dem Magnetanker verbunden ist, kann die Wärmeenergie über die Membran an den Fluidanschluss weitergegeben werden. Infolgedessen bietet die Führung einen zusätzlichen Vorteil, indem sie beim Auftauprozess eines Fluids im Fluidanschluss oder zu dessen Gefrierschutz beiträgt.

Gemäß eines Aspekts wird das Absperrventil in einem SCR-System verwendet. Das SCR-System umfasst eine Pumpe in einem Fördermodul und ein Dosiermodul, die durch eine Druckleitung miteinander verbunden sind. Das oben beschriebene Absperrventil ist in der Druckleitung angeordnet. Des Weiteren umfasst die Druckleitung einen Drucksensor, der zwischen Absperrventil und Dosiermodul angeordnet ist. Dieses SCR-System hat den Vorteil, dass eine Grundleckage durch Pumpenspalte einer Pumpe, die durch Drehrichtungsumkehr fördern und rücksaugen kann, verhindert wird.

Die Membran, die Druckfeder, der Magnetanker, die Führung und der Führungsbolzen sind derart eingerichtet, dass das Absperrventil die folgenden Modi annehmen kann. In einem Sperrmodus wird die Membran, durch die Federkraft der Druckfeder auf den Magnetanker, stromlos sowohl auf einen Fluideinlass als auch einen Fluidauslass gedrückt und verschließt beide dicht, wenn der Druck am Fluideinlass und am Fluidauslass unterhalb eines festgelegten Drucks liegt. Das bietet den Vorteil, dass das Absperrventil im Sperrmodus eine Absperrung gegen einen Unterdruck und einen Überdruck, die unterhalb des festgelegten Drucks liege, sowohl aus dem Fluideinlass als auch aus dem Fluidauslass sicherstellt. Des Weiteren ist ein Dosiermodus vorgesehen, in dem das Absperrventil ab dem festgelegten Druck hydraulisch stromlos geöffnet wird und durch den Druck offen bleibt. Dadurch ist kein aktives Ansteuern in einem Dosierbetrieb des SCR-Systems notwendig. Darüber hinaus ist ein Rücksaugmodus vorgesehen, in dem eine Magnetkraft zwischen dem Magnetjoch und dem Magnetanker das Absperrventil in einer offenen Position hält. Dies ermöglicht ein Rücksaugen eines Reduktionsmittels aus der Druckleitung des SCR-Systems.

Ein weiterer Aspekt des Absperrventils betrifft einen Eisdruckschutz des SCR-Systems. Das gefrierende Reduktionsmittel führt zu einem Eisdruck, der zu einem Verdrängen eines Volumens führen kann. Die Membran kann am Fluideinlass in Richtung des Ventilinneren gedrückt werden, ohne dass das Absperrventil durchlässig wird. Dadurch wird ein Eisdruck-Verdrängungsvolumen definiert.

Das Verfahren zur Leckagedetektion und/oder Dosiermengenabweichungserkennung wird in dem oben beschriebenen SCR-System, inklusive Absperrventil eingesetzt. Hierbei umfasst das Verfahren folgende Schritte: Zu Beginn öffnet das Absperrventil, sodass ein Befüllen der Druckleitung mit Reduktionsmittel ermöglicht wird. Daraufhin wird das Absperrventil geschlossen und ein Druck stromabwärts des Absperrventils, also zwischen Absperrventil und Dosiermodul, in der Druckleitung eingeschlossen. Der eingeschlossene Druck wird durch den Drucksensor überwacht. Nun wird ein Druck stromaufwärts des Absperrventils, also zwischen Absperrventil und Fördermodul, durch Abschalten der Pumpe, abgesenkt. In einem weiteren Schritt kann eine Leckagedetektion und/oder Dosiermengenabweichungserkennung durchgeführt werden, indem ausgenutzt wird, dass der Druck stromabwärts des Absperrventils, wie oben beschrieben, mittels des Drucksensors, überwacht wird. Optional kann das Absperrventil durch Federkraft der Druckfeder geschlossen werden. Dies bietet den Vorteil, dass das Absperrventil selbstständig geschlossen wird und auch bleibt, ohne dass Strom zugeführt werden muss. Die Druckfeder kann zusätzlich eine Kraft aufbringen, um die Membran gegen einen Fuideinlass und einen Fluidauslass zu drücken, wenn der Druck stromaufwärts des Absperrventils abgesenkt wird. Dadurch wird ein gleichzeitiges Schließen beider Öffnungen erreicht. Dies führt dazu, dass weder der Unterdruck, aufgrund der Pumpe, stromaufwärts des Absperrventils, noch der Überdruck durch den eingeschlossenen Druck, stromabwärts des Absperrventils, zu einem Öffnen des Absperrventils führt. Zudem ist es nicht nötig, das Absperrventil während der Leckagedetektion und/oder der Dosiermengenabweichungserkennung mit Strom zu versorgen.

Gemäß eines Aspekts, kann beim Befüllen der Druckleitung mit Reduktionsmittel ein erster Druck im System aufgebaut werden. Dieser liegt insbesondere in einem Bereich von 5,8 bar bis 10 bar. Anschließend wird Druck auf einen zweiten Druck, der insbesondere zwischen 2 bar und 5,5 bar liegt, reduziert, woraufhin das Absperrventil schließt. Dadurch wird garantiert, dass sich der Druck überall im SCR-System ausgleicht. Der Druckabfall kann beispielsweise über eine Drossel oder ein Rückschlagventil realisiert werden, die einen Rücklauf mit einem Abschnitt der Druckleitung stromaufwärts des Absperrventils verbindet. Der zweite Druck wird somit in der Druckleitung zwischen Absperrventil und Dosiermodul eingeschlossen und kann zur Leckagedetektion und/oder zur Dosiermengenabweichungserkennung verwendet werden. Daraufhin wird der Druck stromaufwärts des Absperrventils durch die Pumpe auf einen dritten Druck, zwischen 1 bar und 2 bar, abgesenkt. Dies führt zu einer Druckdifferenz zwischen Fluideinlass und Fluidauslass des Absperrventils, die ein Schließen des Absperrventils bewirkt.

Die Leckagedetektion wird vorzugsweise ausgeführt, indem der eingeschlossene Druck stromabwärts des Absperrventils (zweiter Druck) über eine festgelegte Zeitspanne von 0,5 bis 30 Sekunden vom Drucksensor detektiert wird. Ändert sich der eingeschlossene Druck während dieser Zeitspanne, kann auf eine Leckage in der Druckleitung oder im Dosiermodul geschlossen werden.

Ist die Leckagedetektion und/oder die Dosiermengenabweichungserkennung abgeschlossen, kann der Druck stromaufwärts des Absperrventils, also aufseiten der Pumpe, wieder auf einen vierten Druck erhöht werden. Dieser kann wiederum insbesondere in einem Bereich von 4,8 bar bis 10 bar liegen. Als Resultat ist das SCR-System diagnostiziert und dosierfähig.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, eine Leckagedetektion und/oder Dosiermengenabweichungserkennung durchzuführen.

### Kurze Beschreibung der Zeichnungen

Ausführungsbeispiele der Erfindung sind in den Zeichnungen dargestellt und in der nachfolgenden Beschreibung näher erläutert.
Figur 1 zeigt schematisch ein Absperrventil gemäß einer Ausführungsform der Erfindung.
Figur 2 zeigt schematisch ein Absperrventil gemäß einer weiteren Ausführungsform der Erfindung.
Figur 3 zeigt schematisch ein Absperrventil gemäß noch einer weiteren Ausführungsform der Erfindung.
Figur 4 zeigt schematisch ein SCR-System gemäß einer Ausführungsform der Erfindung.
Figur 5 zeigt ein Ablaufdiagramm eines Ausführungsbeispiels des erfindungsgemäßen Verfahrens.
Figur 6a zeigt ein Diagramm eines Drucks in einem ersten Abschnitt der Druckleitung in einem SCR-System gemäß einem Ausführungsbeispiel der Erfindung über die Zeit.
Figur 6b zeigt ein Diagramm eines Drucks in einem ersten Abschnitt der Druckleitung in einem SCR-System gemäß einem Ausführungsbeispiel der Erfindung über die Zeit.

### Ausführungsbeispiel der Erfindung

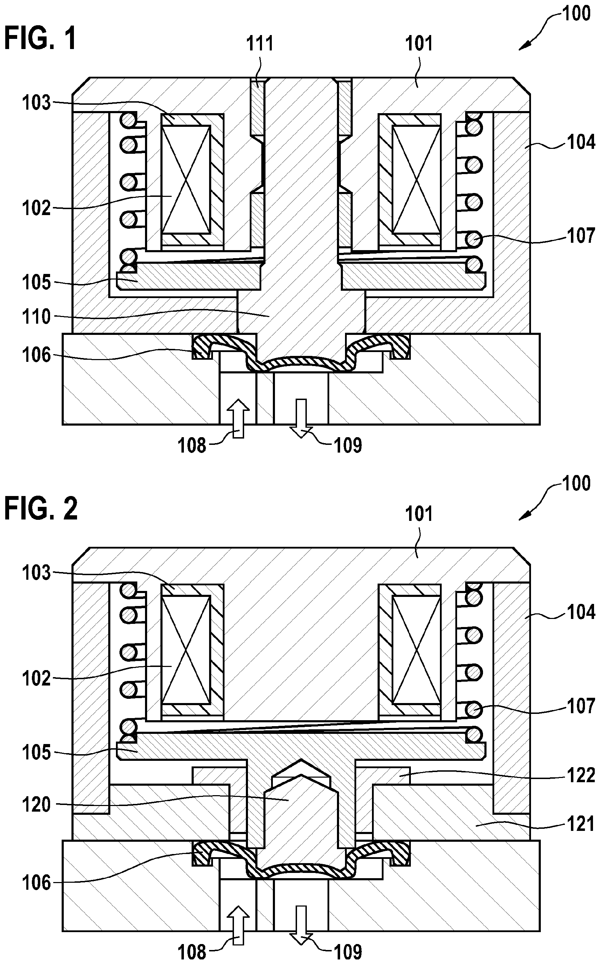

In Figur 1 ist ein Absperrventil 100, gemäß eines ersten Ausführungsbeispiels der Erfindung, gezeigt. Es umfasst ein Magnetjoch 101, welches eine Magnetspule 102 umfasst, die von einem Spulenträger 103 gehalten wird. Umschlossen werden das Magnetjoch 101 sowie der Spulenträger 103, inklusive Magnetspule 102, von einer Magnetumfassung 104. Außerdem umfasst das Absperrventil 100 einen Flachanker 105, an dem eine elastische Membran 106 angeordnet ist. Dabei besteht die Membran 106 aus HNBR (Hydrierter Acrylnitrilbutadien-Kautschuk) und wird auf den Flachanker 105 aufgespritzt oder aufvulkanisiert. Der Flachanker 105 wiederum ist mit einem Ende einer Druckfeder 107 verbunden, das den Rand der Mantelfläche des Flachankers 105 umläuft. In einer weiteren Ausführungsform kann ein Tauchanker, statt des Flachankers 105 verwendet werden. Ein anderes Ende der Druckfeder 107 ist auf so eine Weise mit dem Magnetjoch 101 verbunden, dass die Druckfeder 107 den Spulenträger 103, inklusive Magnetspule 102 in ihrem Inneren umschließt. Ein Fluideinlass 108 und ein Fluidauslass 109 sind so angeordnet, dass die Membran 106 auf beiden dichtschließend anpressbar ist und beide damit verschließt.

Des Weiteren umfasst das Absperrventil 100 einen Führungsbolzen 110, der mit dem Flachanker 105 verbunden ist sowie eine Führungsbuchse 111, in die der Führungsbolzen 110 eingeschoben werden kann. Die Führungsbuchse 111 besteht aus zwei Teilen, die innerhalb der Magnetspule 102 entlang ihrer Spulenachse auf einer gemeinsamen Linie angeordnet. Der Führungsbolzen erstreckt sich geöffneten Zustand des Absperrventils bis über beide Führungsbuchsen 111 bis zum Rand des Magnetjochs 101. Infolgedessen wird der Führungsbolzen 110 in solcher Weise von der Führungsbuchse 111 gehalten, dass sich dieser nur noch entlang der Achse der Druckfeder 107 bewegen kann. Aus diesem Grund wirkt der Führungsbolzen 110, zusammen mit der Führungsbuchse 111, als Führung für den Flachanker 105.

Da die Führungsbuchse 111 mit dem Führungsbolzen 110 sowie dem Magnetjoch 101 und somit mit der Magnetspule 102 verbunden ist, kann Wärmeenergie zwischen Magnetspule 102 und Führungsbolzen 110 über Wärmeübergangsflächen übertragen werden. Anschließend wird die Wärmeenergie über den Flachanker 105 weiter an die Membran 106 übertragen, die die Wärmeenergie dann in die Fluidanschlüsse 108 und 109 abgeben kann, wo sie zum Auftauen einer Flüssigkeit, bzw. zu deren Gefrierschutz beiträgt.

Figur 2 zeigt ein zweites Ausführungsbeispiel des erfindungsgemäßen Absperrventils 100. Es umfasst bis auf die Führungselemente im Wesentlichen dieselben Bauteile, die in Figur 1 beschrieben wurden und diese haben im Wesentlichen dieselbe Funktion. Es wird daher auf eine erneute Beschreibung dieser verzichtet. In diesem Ausführungsbeispiel ist ein Führungsbolzen 120 ebenfalls mit dem Flachanker 105verbunden. Dieser kann in einer weiten Ausführungsform als Tauchanker ausgebildet sein. Dabei erstreckt sich der Führungsbolzen 120 von der Membranseite des Absperrventils 100 aus in den Flachanker 105 und wird von diesem umschlossen, wodurch er diesen stützt. An einem Zwischenring 121, der an der Magnetumfassung 104 angeordnet ist, ist eine Gleitlagerbuchse 122 angeordnet. Der Flachanker 105 wird von dieser Gleitlagerbuchse 122 geführt, indem er an deren Innseite entlang reibt. Es ist anzumerken, dass der Führungsbolzen 120 nicht ins Innere der Magnetspule 102 eindringt, wie im ersten Ausführungsbeispiel, sondern im Wesentlichen auf die Länge der Gleitreibungsbuchse begrenzt ist.

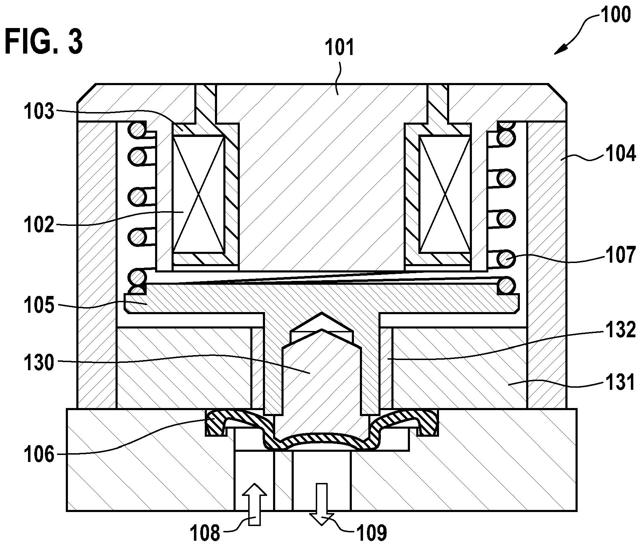

Figur 3 zeigt ein drittes Ausführungsbeispiel des erfindungsgemäßen Absperrventils 100. Das dritte Ausführungsbeispiel unterscheidet sich vom zweiten Ausführungsbeispiel in Figur 2 lediglich in der Gestaltung der Führung. Es wird daher auf eine erneute Beschreibung der identischen Bauteile verzichtet. Im dritten Ausführungsbeispiel ist ein Führungsbolzen 130 analog zum zweiten Ausführungsbeispiel mit dem Flachanker 105 verbunden. Dieser kann in einer weiten Ausführungsform als Tauchanker ausgebildet sein. Gleichermaßen erstreckt sich der Führungsbolzen 130 von der Membranseite des Absperrventils 100 aus in den Flachanker 105 und wird von diesem umschossen, wodurch er diesen stützt. Auf einem Zwischenring 131, der an der Magnetumfassung 104 angeordnet ist, wird statt der Gleitlagerbuchse 122 eine Gleitlagerschicht 132 aufgebracht. Nun reibt der Flachanker an der Gleitlagerschicht 132 des Zwischenrings 131 entlang und wird infolgedessen durch diese geführt. Auch hier dringt der Führungsbolzen 120 nicht ins Innere der Magnetspule 102 ein, wie im ersten Ausführungsbeispiel, sondern ist im Wesentlichen auf die Länge der Gleitreibungsschicht begrenzt.

In der zweiten und dritten Ausführungsform wird jeweils ein geeignetes Material für die Gleitlagerbuchse 122 bzw. die Gleitlagerschicht 132 verwendet werden, mit dem eine große Anzahl Hübe ohne Abnutzung möglich ist. In diesem Fall wird Nickel verwendet, das 0,1-10 Millionen Hübe übersteht. Der Flachanker 105 ist an der Fläche, mit der er an der Gleitlagerbuchse 122 bzw. der Gleitlagerschicht 132 reibt, geschliffen bzw. poliert.

Das Absperrventil 100 nimmt, je nach Bedingung oder Einsatz, unterschiedliche Modi an. In einem Sperrmodus drückt die Druckfeder 107 den Flachanker 105 in Richtung des Fluideinlasses 108 und des Fluidauslasses 109, sodass die Membran 106 beide gleichzeitig verschließt. Somit wird das Absperrventil 100 durch die Federkraft der Druckfeder 107 geschlossen und es wird keine Stromzufuhr benötigt. Dadurch wird verhindert, dass ein Fluid durch das Absperrventil strömen kann. Die Federkraft der Druckfeder 107 hält das Absperrventil auch geschlossen, wenn ein Unter- oder Überdruck am Fluideinlass 108 und Fluidauslass 109 vorliegt, solange dieser klein genug ist, beispielsweise unter 5,6 bar.

Ein weiterer Modus ermöglicht dem Fluid vom Fluideinlass zum Fluidauslass zu strömen. In diesem Dosiermodus herrscht im Fluideinlass 108 ein so großer Druck p, der gegen die Membran 106 und somit gegen den Flachanker 105 drückt, dass dieser die Federkraft der Druckfeder 107 überwindet. Dadurch wird der Flachanker 105 in Richtung Magnetjoch 101 gedrückt und eine Verbindung zwischen Fluideinlass 108 und Fluidauslass 109 ist gegeben. In dem vorliegenden Ausführungsbeispiel beträgt dieser Druck p 5,6 bar. Bei diesem Modus ist ebenfalls keine Stromzufuhr notwendig. Die Membran öffnet druckunterstützt und bietet, bei anliegendem Druck p von 4 bis 10 bar im System, keinen Druckverlust.

Darüber hinaus nimmt das Absperrventil 100 einen Rücksaugmodus an, indem die Magnetspule 102 angesteuert wird. Diese stellt eine Magnetkraft zwischen Magnetjoch 101 und Flachanker 105 bereit, was zur Folge hat, dass der Flachanker 105 zum Magnetjoch 101 hin gezogen wird und die Federkraft der Druckfeder 107 überwunden wird. Dabei wird eine Verbindung zwischen Fluidauslass 109 und Fluideinlass 108 hergestellt bzw. gehalten, durch die Fluid strömen kann.

Da die Membran 106 elastisch ist, ist es möglich diese zu verformen. Am Fluideinlass ist es daher möglich die Membran 106 zwischen dem Flachanker 105 und der Magnetumfassung 104 in das Innere des Absperrventils zu drücken. Allerdings verschließt die Membran 106 im Sperrmodus weiterhin sowohl den Fluideinlass 108, als auch den Fluidauslass 109. Aus diesem Grund wird nur ein zusätzliches Volumen ausgebildet. Dieses Volumen kann genutzt werden, wenn das Fluid eine Flüssigkeit ist, die sich beim Gefrieren ausdehnt, indem es als Eisdruck-Verdrängungsvolumen fungiert.

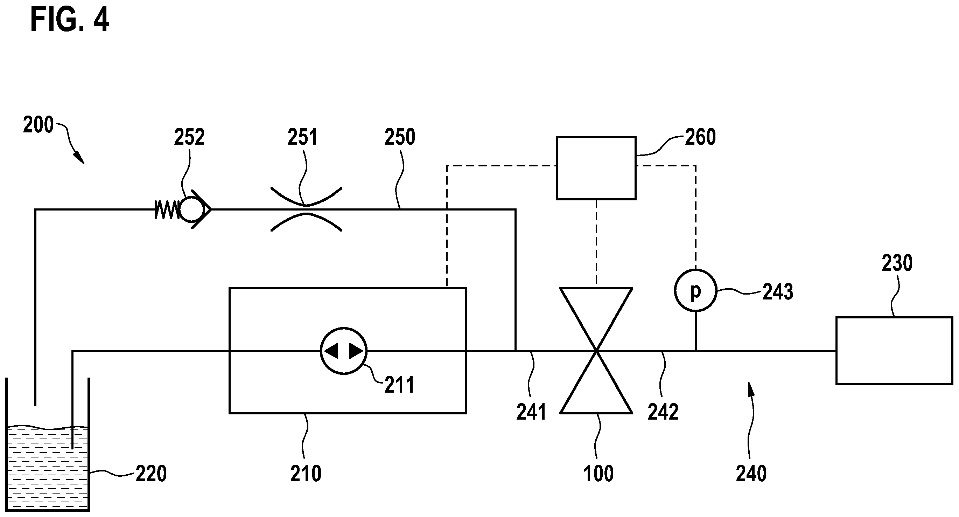

Figur 4 zeigt ein SCR-System 200, das das Absperrventil 100 gemäß dem ersten, zweiten oder dritten Ausführungsbeispiel umfasst. Des Weiteren umfasst es ein Fördermodul 210, welches eine Pumpe 211 umfasst, die eingerichtet ist Reduktionsmittel aus einem Reduktionsmitteltank 220 zu fördern und es mittels Drehrichtungsumkehr in den Reduktionsmitteltank 22 zurückzusaugen. Das Fördermodul 210 ist mit einem Dosiermodul 230 über eine Druckleitung 240 verbunden. Das Absperrventil 100 ist in der Druckleitung 240 angeordnet und teilt diese in zwei Abschnitte. Ein erster Abschnitt 241 der Druckleitung 240 befindet sich stromaufwärts des Absperrventils 100, zwischen diesem und dem Fördermodul 210. Ein zweiter Abschnitt 242 der Druckleitung 240 liegt stromabwärts des Absperrventils 100, zwischen diesem und dem Dosiermodul 230. Im zweiten Abschnitt 242 der Druckleitung 240 ist des Weiteren ein Drucksensor 243 angeordnet, der den Druck p im zweiten Abschnitt 242 - und gegebenenfalls, bei geöffnetem Absperrventil 100, ebenfalls im ersten Abschnitt 241 - der Druckleitung 240 überwacht. Darüber hinaus umfasst das SCR-System 200 eine Rückförderleitung 250, die den ersten Abschnitt 241 der Druckleitung 240 mit dem Reduktionsmitteltank 220 verbindet. In dieser Rückförderleitung 250 ist eine Rücklaufdrossel 251 und ein Rückschlagventil 252 angeordnet. In einer anderen Ausführungsform kann die Rücklaufdrossel 251 oder das Rückschlagventil 252 entfernt werden. Das Absperrventil 100, der Drucksensor 243 und das Fördermodul 210 sind mit einem elektronischen Steuergerät 260 verbunden, das diese steuert.

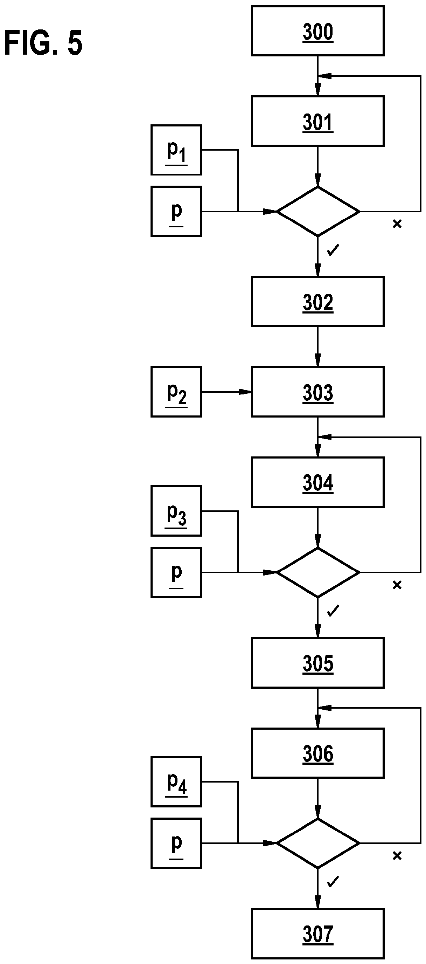

In Figur 5 ist ein Ablaufdiagramm eines Ausführungsbeispiels des erfindungsgemäßen Verfahrens zur Leckagedetektion und/oder Dosiermengenabweichungserkennung dargestellt, wie es im SCR-System 200 ausgeführt wird. Das Dosiermodul 230 bleibt während des gesamten Verfahrens geschlossen. In einem ersten Schritt 300 öffnet das Absperrventil 100. Bei angeschalteter Pumpe 211 erfolgt eine Befüllung 301 der Druckleitung 240 mit Reduktionsmittel, wodurch der Druck p in beiden Teilen 241 und 242 der Druckleitung steigt. Erreicht der Druck p in der gesamten Druckleitung 240 einen ersten Druck p₁, bei 7 bar, wird die Pumpe 211 ausgeschaltet 302. Als Folge dessen, sinkt der Druck p in der Druckleitung 240. Erreicht der Druck p nun einen zweiten Druck p₂, bei 3,5 bar, überwindet die Federkraft der Druckfeder 107 den Druck p und das Absperrventil 100 schließt 303. Dadurch wird der zweite Druck p₂ im zweiten Abschnitt 242 der Druckleitung 240 eingeschlossen. Anschließend erfolgt ein weiteres Absenken 304 des Drucks p im ersten Abschnitt 241 der Druckleitung 240, bis ein dritter Druck p₃, bei 1,5 bar, erreicht wird.

Es folgt ein weiterer Schritt 305, in dem eine Leckagedetektion und/oder Dosiermengenabweichungserkennung durchgeführt wird. Bei der Leckagedetektion wird der Druck p₂, der im zweiten Abschnitt 242 der Druckleitung 240 eingeschlossen ist über einen vorgegebenen Zeitraum von 10 Sekunden beobachtet Sinkt der Druck p während des beobachteten Zeitraums ab, muss ein Teil des Fluids durch eines der Bauteile Dosiermodul 230, Druckleitung 240, Absperrventil 100 oder dazwischen befindlichen Verbindungsstücken entweichen. Da das Absperrventil 100 so eingerichtet ist, eine Leckage bestmöglich zu unterbinden, kann daraus eine Leckage des Dosiermoduls 230 und/oder der Druckleitung 240 detektiert werden. Des Weiteren kann, über den Druck und die geförderte Menge Reduktionsmittel, eine Abweichung zwischen gewünschter Dosiermenge und realer Dosiermenge, die im zweiten Abschnitt 242 der Druckleitung 240 eingeschlossen ist, erkannt werden.

Ist die Leckagedetektion und/oder die Dosiermengenabweichungserkennung abgeschlossen, wird in einem weiteren Schritt 306 der Druck p im ersten Abschnitt 241 der Druckleitung 240, wieder erhöht, indem die Pumpe 211 erneut eingeschaltet wird. Erreicht der Druck p einen vierten Druck p₄, öffnet 307 das Absperrventil 100 erneut und das System ist diagnostizier und dosierfähig.

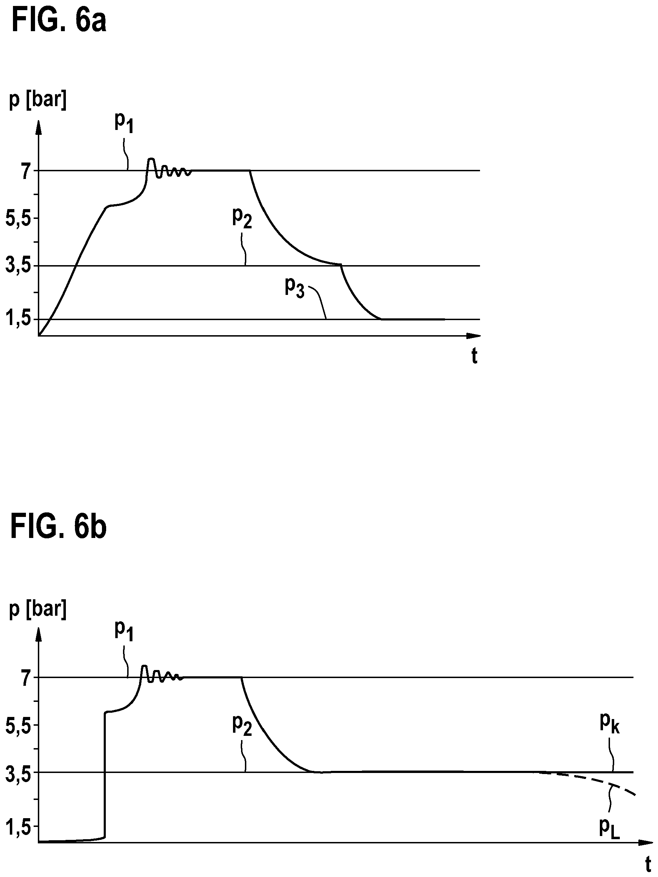

In den Figuren 6a und 6b sind Diagramme aufgezeigt, die den Druckverlauf im ersten Abschnitt 241 sowie im zweiten Abschnitt 242 der Druckleitung 240 über der Zeit t darstellen. Das Absperrventil 100 öffnet 300 bei einem Druck p von 5,6 bar. Im Zeitraum zwischen dem Öffnen 300 und dem Schließen 303 des Absperrventils 100 beim zweiten Druck p₂ ist der Druckverlauf im ersten Abschnitt 241 und zweiten Abschnitt 242 der Druckleitung 240 in beiden Figuren gleich. Wird der Druck p₁ bei 7 bar erreicht, ist ein Einschwingen des Drucks p zu erkennen. Dieser ist auf den Ausgleich des Drucks p im der gesamten Druckleitung 240 zurückzuführen. Anschließend erfolgt das Abschalten 302 der Pumpe 211. Der Druck sinkt auf den zweiten Druck p₂, der bei 3,5 bar liegt. Bei diesem zweiten Druck p₂ schließt das Absperrventil 100, wie oben beschrieben. Der Druckverlauf im ersten Abschnitt 241, der in Figur 6a dargestellt ist, unterscheidet sich nun vom Druckverlauf im zweiten Abschnitt 242 der Druckleitung 240 in Figur 6b. Während der Druck p im ersten Abschnitt 241 auf einen dritten Druck p₃, bei 1,5 bar absinkt, bleibt der Druck zunächst konstant. In Figur 6b sind zwei Fälle dargestellt. Zum einen bleibt der Druck p ab dem Erreichen des zweiten Drucks p₂ bei einem konstanten Druck pₖ. Zum Anderen ist ein Abfallen des Drucks p hin zu einem Druck p_{L} zu erkennen. Aus diesem Abfall des Drucks p_{L} kann wie oben beschrieben auf eine Leckage geschlossen werden.

## Patentansprüche

1. Absperrventil (100), umfassend ein Magnetjoch (101), eine Magnetspule (102) und eine Druckfeder (107) sowie eine Führung (111, 122, 132), einen Führungsbolzen (110, 120, 130) und einen mit dem Führungsbolzen (110, 120, 130) verbundenen Magnetanker (105), an dem eine elastische Membran (106) angeordnet ist, wobei die Membran (106) auf mindestens einem Fluidanschluss (108, 109) dichtschließend anpressbar ist und die Druckfeder (107) so angeordnet ist, dass sie die Magnetspule (102) umschließt; wobei die Membran (101), die Druckfeder (107), der Magnetanker (105), die Führung (111, 122, 132) und der Führungsbolzen (110, 120, 130) derart eingerichtet sind, dass das Absperrventil (100) die folgenden Modi annehmen kann:
- einen Sperrmodus, in dem die Membran (101) durch die Federkraft der Druckfeder (107) sowohl einen Fluideinlass (108) als auch einen Fluidauslass (109) stromlos verschließt, wenn der Druck (p) am Fluideinlass (108) und am Fluidauslass (109) unter einem festgelegten Druck (p₂) liegt;
- einen Dosiermodus, in dem das Absperrventil (100) stromlos öffnet, wenn der Druck (p) am Fluideinlass (108) und/oder am Fluidauslass (109) über dem festgelegten Druck (p₂) liegt;
- und einen Rücksaugmodus, in dem eine Magnetkraft zwischen dem Magnetjoch (101) und dem Magnetanker (105) das Absperrventil (100) in einer offenen Position hält.

2. Absperrventil nach Anspruch 1, **dadurch gekennzeichnet, dass** der Magnetanker ein Flachanker oder ein Tauchanker ist.

3. Absperrventil (100) nach Anspruch 1 oder 2, **dadurch gekennzeichnet, dass** die Führung als mindestens eine Führungsbuchse (111) innerhalb der Magnetspule (102) ausgebildet ist und der Führungsbolzen (110) in diese eingeschoben ist.

4. Absperrventil (100) nach Anspruch 1 oder 2, **dadurch gekennzeichnet, dass** die Führung als Gleitlagerbuchsen (122) ausgebildet ist und der Magnetanker (105) an diesen Gleitlagerbuchsen (122) entlang reibt und vom Führungsbolzen (120) gestützt ist.

5. Absperrventil (100) nach Anspruch 1 oder 2, **dadurch gekennzeichnet, dass** die Führung als Gleitlagerschicht (132) ausgebildet ist und der Magnetanker (105) an dieser Gleitlagerschicht (132) entlang reibt und vom Führungsbolzen (130) gestützt ist.

6. SCR-System (200), das eine Pumpe (211) und ein Dosiermodul (230), die durch eine Druckleitung (240) miteinander verbunden sind, sowie ein Absperrventil (100) gemäß einem der Ansprüche 1 bis 5 in der Druckleitung (140) und einen Drucksensor (243), der in der Druckleitung (240) zwischen Absperrventil (100) und Dosiermodul (230) angeordnet ist, umfasst.

7. Verfahren zur Leckagedetektion und/oder Dosiermengenabweichungserkennung bei einem SCR-System (200) gemäß Anspruch 6, wobei das Absperrventil (100) einen Druck (p) in der Druckleitung (240) einschließt und dieser durch den Drucksensor (243) überwacht wird, umfassend folgende Schritte:
- Öffnen (300) des Absperrventils (100);
- Befüllen (301) der Druckleitung (240) mit Reduktionsmittel;
- Schließen (303) des Absperrventils (100);
- Absenken (304) eines Drucks (p) stromaufwärts des Absperrventils (100) durch Abschalten (302) der Pumpe (211);
- Durchführen (305) einer Leckagedetektion und/oder Dosiermengenabweichungserkennung durch Überwachen des Drucks (p) stromabwärts des Absperrventils, mittels des Drucksensors (243).

8. Verfahren nach Anspruch 7, **dadurch gekennzeichnet, dass** das Absperrventil (100) durch Federkraft der Druckfeder (107) geschlossen wird.

9. Verfahren nach Anspruch 8, **dadurch gekennzeichnet, dass** eine Kraft, die die Membran (106) gegen einen Fluideinlass (108) und einen Fluidauslass (109) drückt, durch die Druckfeder (107) aufgebracht wird, wenn der Druck (p) stromaufwärts des Absperrventils (100) abgesenkt wird (304).

10. Verfahren nach einem der Ansprüche 7 bis 9, **dadurch gekennzeichnet, dass** beim Befüllen (301) der Druckleitung (240) mit Reduktionsmittel ein erster Druck(p₁) im SCR-System (200) aufgebaut wird, dieser dann auf einen zweiten Druck (p₂) reduziert wird, bei dem das Absperrventil (100) geschlossen wird und dann der Druck (p) stromaufwärts des Absperrventils (100) durch Abschalten (302) die Pumpe (211) auf einen dritten Druck (p₃) abgesenkt wird.

11. Verfahren nach einem der Ansprüche 7 bis 10, **dadurch gekennzeichnet, dass** zur Leckagedetektion ein Absinken des eingeschlossenen Drucks (p) stromabwärts des Absperrventils (100) über eine festgelegte Zeitspanne vom Drucksensor (243) detektiert wird.

12. Verfahren nach einem der Ansprüche 7 bis 11, **dadurch gekennzeichnet, dass** nach der Leckagedetektion und/oder der Dosiermengenabweichungserkennung der Druck (p) stromaufwärts des Absperrventils (100) bis zu einem vierten Druck (p₄) erhöht wird (306) und das Absperrventil (100) geöffnet wird (307), wenn der vierte Druck (p4) überschritten wurde.

13. Computerprogramm, welches eingerichtet ist und Befehle umfasst, die bei der Ausführung des Programms durch einen Computer oder ein elektronisches Gerät diesen veranlassen, jeden Schritt des Verfahrens nach einem der Ansprüche 7 bis 12 durchzuführen.

14. Maschinenlesbares Speichermedium, auf welchem ein Computerprogramm nach Anspruch 13 gespeichert ist.

15. Elektronisches Steuergerät (260), welches eingerichtet ist, um mittels eines Verfahrens nach einem der Ansprüche 7 bis 12 eine Leckagedetektion und/oder Dosiermengenabweichungserkennung durchzuführen.

## Claims

1. Shut-off valve (100) comprising a magnet yoke (101), a magnet coil (102) and a compression spring (107), and also comprising a guide (111, 122, 132), a guide pin (110, 120, 130) and a magnet armature (105) which is connected to the guide pin (110, 120, 130) and on which an elastic diaphragm (106) is arranged, wherein the diaphragm (106) is able to be pressed, such that sealing closure is realized, onto at least one fluid port (108, 109), and the compression spring (107) is arranged in such a way as to surround the magnet coil (102); wherein the diaphragm (101), the compression spring (107), the magnet armature (105), the guide (111, 122, 132) and the guide pin (110, 120, 130) are configured such that the shut-off valve (100) can assume the following modes:
- a blocking mode, in which, by way of the spring force of the compression spring (107), the diaphragm (101) closes off both a fluid inlet (108) and a fluid outlet (109) without electrical energization if, at the fluid inlet (108) and at the fluid outlet (109), the pressure (p) is below a defined pressure (p₂);
- a metering mode, in which the shut-off valve (100) opens without electrical energization if, at the fluid inlet (108) and/or at the fluid outlet (109), the pressure (p) is above the defined pressure (p₂);
- and a suck-back mode, in which a magnetic force between the magnet yoke (101) and the magnet armature (105) keeps the shut-off valve (100) in an open position.

2. Shut-off valve according to Claim 1, **characterized in that** the magnet armature is a flat armature or a plunger-type armature.

3. Shut-off valve (100) according to Claim 1 or 2, **characterized in that** the guide is designed as at least one guide bush (111) within the magnet coil (102), and the guide pin (110) is inserted into said guide bush.

4. Shut-off valve (100) according to Claim 1 or 2, **characterized in that** the guide is designed as slide bearing bushes (122), and the magnet armature (105) rubs along said slide bearing bushes (122) and is supported by the guide pin (120).

5. Shut-off valve (100) according to Claim 1 or 2, **characterized in that** the guide is designed as a slide bearing layer (132), and the magnet armature (105) rubs along said slide bearing layer (132) and is supported by the guide pin (130).

6. SCR system (200) comprising a pump (211) and a metering module (230), which are connected to one another by a pressure line (240), and also a shut-off valve (100) according to one of Claims 1 to 5 in the pressure line (140), and a pressure sensor (243) which is arranged in the pressure line (240) between the shut-off valve (100) and the metering module (230).

7. Method for detecting leakage and/or for identifying variations in metered amounts in an SCR system (200) according to Claim 6, wherein the shut-off valve (100) contains a pressure (p) in the pressure line (240), and said pressure is monitored by the pressure sensor (243), comprising the following steps:
- opening (300) the shut-off valve (100);
- filling (301) the pressure line (240) with reducing agent;
- closing (303) the shut-off valve (100);
- lowering (304) a pressure (p) upstream of the shut-off valve (100) by deactivating (302) the pump (211);
- carrying out (305) leakage detection and/or identification of variations in metered amounts by monitoring the pressure (p) downstream of the shut-off valve by means of the pressure sensor (243).

8. Method according to Claim 7, **characterized in that** the shut-off valve (100) is closed by spring force of the compression spring (107).

9. Method according to Claim 8, **characterized in that** a force which pushes the diaphragm (106) against a fluid inlet (108) and a fluid outlet (109) is applied by the compression spring (107) if the pressure (p) upstream of the shut-off valve (100) is lowered (304).

10. Method according to one of Claims 7 to 9, **characterized in that** a first pressure (p₁) is built up in the SCR system (200) when the pressure line (240) is being filled (301) with reducing agent, which first pressure is then reduced to a second pressure (p₂), at which the shut-off valve (100) is closed, and the pressure (p) upstream of the shut-off valve (100) is then lowered to a third pressure (p₃) by deactivating (302) the pump (211).

11. Method according to one of Claims 7 to 10, **characterized in that**, for leakage detection, a drop in the contained pressure (p) downstream of the shut-off valve (100) is detected by the pressure sensor (243) over a defined period of time.

12. Method according to one of Claims 7 to 11, **characterized in that**, after leakage detection and/or identification of variations in metered amounts, the pressure (p) upstream of the shut-off valve (100) is raised (306) to a fourth pressure (p₄), and the shut-off valve (100) is opened (307) if the fourth pressure (p₄) has been exceeded.

13. Computer program which is configured and comprises commands which, during the execution of the program by a computer or an electronic unit, cause said computer program to carry out each step of the method according to one of Claims 7 to 12.

14. Machine-readable storage medium on which a computer program according to Claim 13 is stored.

15. Electronic control unit (260) which is configured to carry out leakage detection and/or identification of variations in metered amounts by means of a method according to one of Claims 7 to 12.

## Revendications

1. Soupape d'arrêt (100), comprenant une culasse magnétique (101), une bobine magnétique (102) et un ressort de pression (107), ainsi qu'un guide (111, 122, 132), un axe de guidage (110, 120, 130) et un induit magnétique (105) relié avec l'axe de guidage (110, 120, 130), sur lequel est agencée une membrane élastique (106), la membrane (106) pouvant être comprimée hermétiquement sur au moins un raccordement de fluide (108, 109), et le ressort de pression (107) étant agencé de telle sorte qu'il entoure la bobine magnétique (102) ;
la membrane (101), le ressort de pression (107), l'induit magnétique (105), le guide (111, 122, 132) et l'axe de guidage (110, 120, 130) étant conçus de telle sorte que la soupape d'arrêt (100) puisse adopter les modes suivants :
- un mode d'arrêt, dans lequel la membrane (101) ferme sans courant par la force de ressort du ressort de pression (107) aussi bien une entrée de fluide (108) qu'une sortie de fluide (109), lorsque la pression (p) au niveau de l'entrée de fluide (108) et au niveau de la sortie de fluide (109) est inférieure à une pression (p₂) fixée ;
- un mode de dosage, dans lequel la soupape d'arrêt (100) ouvre sans courant, lorsque la pression (p) au niveau de l'entrée de fluide (108) et/ou au niveau de la sortie de fluide (109) est supérieure à la pression (p₂) fixée ;
- et un mode de ré-aspiration, dans lequel une force magnétique entre la culasse magnétique (101) et l'induit magnétique (105) maintient la soupape d'arrêt (100) dans une position ouverte.

2. Soupape d'arrêt selon la revendication 1, **caractérisée en ce que** l'induit magnétique est un induit plat ou un induit plongeur.

3. Soupape d'arrêt (100) selon la revendication 1 ou 2, **caractérisée en ce que** le guide est configuré sous la forme d'au moins une douille de guidage (111) à l'intérieur de la bobine magnétique (102) et l'axe de guidage (110) est inséré dans celle-ci.

4. Soupape d'arrêt (100) selon la revendication 1 ou 2, **caractérisée en ce que** le guide est configuré sous la forme de douilles à palier lisse (122) et l'induit magnétique (105) frotte le long de ces douilles à palier lisse (122) et est soutenu par l'axe de guidage (120) .

5. Soupape d'arrêt (100) selon la revendication 1 ou 2, **caractérisée en ce que** le guide est configuré sous la forme d'une couche à palier lisse (132) et l'induit magnétique (105) frotte le long de cette couche à palier lisse (132) et est supporté par l'axe de guidage (130).

6. Système SCR (200), qui comprend une pompe (211) et un module de dosage (230), qui sont reliés l'un avec l'autre par une conduite sous pression (240), ainsi qu'une soupape d'arrêt (100) selon l'une quelconque des revendications 1 à 5 dans la conduite sous pression (140) et un capteur de pression (243), qui est agencé dans la conduite sous pression (240) entre la soupape d'arrêt (100) et le module de dosage (230).

7. Procédé de détection d'une fuite et/ou d'identification d'un écart de dosage dans un système SCR (200) selon la revendication 6, dans lequel la soupape d'arrêt (100) confine une pression (p) dans la conduite sous pression (240) et celle-ci est contrôlée par le capteur de pression (243), comprenant les étapes suivantes :
- l'ouverture (300) de la soupape d'arrêt (100) ;
- le remplissage (301) de la conduite sous pression (240) avec un réducteur ;
- la fermeture (303) de la soupape d'arrêt (100) ;
- l'abaissement (304) d'une pression (p) en amont de la soupape d'arrêt (100) par désactivation (302) de la pompe (211) ;
- la réalisation (305) d'une détection d'une fuite et/ou d'une identification d'un écart de dosage par surveillance de la pression (p) en aval de la soupape d'arrêt, au moyen du capteur de pression (243).

8. Procédé selon la revendication 7, **caractérisé en ce que** la soupape d'arrêt (100) est fermée par la force de ressort du ressort de pression (107).

9. Procédé selon la revendication 8, **caractérisé en ce qu'**une force, qui presse la membrane (106) contre une entrée de fluide (108) et une sortie de fluide (109), est appliquée par le ressort de pression (107), lorsque la pression (p) en amont de la soupape d'arrêt (100) est abaissée (304).

10. Procédé selon l'une quelconque des revendications 7 à 9, **caractérisé en ce que**, lors du remplissage (301) de la conduite sous pression (240) avec un réducteur, une première pression (p₁) est établie dans le système SCR (200), celle-ci est ensuite réduite à une deuxième pression (p₂), à laquelle la soupape d'arrêt (100) est fermée, puis la pression (p) en amont de la soupape d'arrêt (100) est abaissée à une troisième pression (p₃) par désactivation (302) de la pompe (211).

11. Procédé selon l'une quelconque des revendications 7 à 10, **caractérisé en ce que**, pour la détection d'une fuite, un abaissement de la pression (p) confinée en aval de la soupape d'arrêt (100) est détecté pendant un intervalle de temps fixé par le capteur de pression (243) .

12. Procédé selon l'une quelconque des revendications 7 à 11, **caractérisé en ce qu'**après la détection d'une fuite et/ou l'identification d'un écart de dosage, la pression (p) en amont de la soupape d'arrêt (100) est augmentée (306) jusqu'à une quatrième pression (p₄) et la soupape d'arrêt (100) est ouverte (307) lorsque la quatrième pression (p₄) a été dépassée.

13. Programme informatique, qui est conçu pour et comprend des instructions qui lors de l'exécution du programme par un ordinateur ou un appareil électronique amènent celui-ci à réaliser chaque étape du procédé selon l'une quelconque des revendications 7 à 12.

14. Support de stockage lisible par machine, dans lequel est stocké un programme informatique selon la revendication 13.

15. Appareil de commande électronique (260), qui est conçu pour réaliser une détection d'une fuite et/ou une identification d'un écart de dosage au moyen d'un procédé selon l'une quelconque des revendications 7 à 12.
